# EUROPEAN PATENT APPLICATION

(11) **EP 3 721 716 A1**
(43) Date of publication of application: **14.10.2020**
(21) Application number: 18886825.1
(22) Date of filing: 05.12.2018
(51) Int. Cl.: A23D 7/00, A23D 9/00, A23G 3/54, A23G 3/40

(54) **OIL AND FAT COMPOSITION FOR FILLING AND SAUCE**

(30) Priority: 05.12.2017 CN 201711269894; 18.09.2018 CN 201811088837
(71) Applicant: Wilmar (shanghai) Biotechnology Research & Development Center Co., Ltd., Shanghai 200137 (CN)
(72) Inventor: CHEN, Cunhong, Shanghai 200137 (CN); ZHANG, Hong, Shanghai 200137 (CN); CONG, Yanxia, Wuhan Hubei 430062 (CN); XU, Zhenbo, Shanghai 200137 (CN); WANG, Yue, Shanghai 200240 (CN); XIE, Yuchen, Shanghai 200137 (CN)
(74) Representative: Barbaro, Gaetano
(86) International application number: PCT/CN2018/119299
(87) International publication number: WO 2019/109931

(57) **Abstract**

An oil and fat composition for a filling or sauce, optionally containing an emulsifier, and having the following features: (1) a solid fat content ≥ 8% at 10°C; (2) a solid fat content ≥ 2% at 20°C; and (3) a solid fat content ≥ 2% under isothermal crystallization for 4 minutes at 10°C. The oil and fat composition of the present disclosure has low saturation, and the sauce made from the composition has good stability and oil separation is difficult to occur at a high temperature. The present invention can be used in baked goods such as breads, cookies, and cakes.

## Description

### Technical Field

This disclosure relates to oil and fat compositions for fillings or sauces.

### Background

In recent years, the combination of chocolate and baked goods has been favored by consumers, and the consumption of fillings, dipping sauces and spreads for baked goods has also increased year by year. According to Mintel data, in the past 5 years, the consumption of chocolate fillings and spreads in the US baking market has been increasing at an annual growth rate of 7% (Kelsy Lindsay, The secrets of producing fillings and spreads, Manufacturing Confectioner, 2016, 12(96):76-80).

Fillings and spreads can also be called an emulsion system, in which the oil and fat is regarded as a continuous phase, and the sugar, milk powder, cocoa powder, nuts and so on are regarded as dispersion phases which are dispersed and filled in the oil and fat crystal skeleton, thus forming a stable crystal network structure. Therefore, fats and oils play a vital role in the processing, shelf life and quality of fillings and spreads (see Kelsy Lindsay, *supra*.), and to a certain extent, spreads and fillings can be used interchangeably. The ideal spreads and fillings should, in a wide temperature range, have a suitable texture, which can not be too hard to spread and can not have oil and fat separation.

US5762990A disclosed that in a filling containing nuts or with high oil content, the low melting point component will migrate to the outer layer of chocolate or the outer layer of cereals such as cakes and breads, thereby causing the product to have poor sensory and taste, for example, the migration of oil and fat from the filling will cause bloom or oil spots on the chocolate shell, and the drying of the core materials in bread, wafer and other baked goods, which will affect the taste and appearance. Therefore, US562990A adds sucrose ester with low HLB value to the oil and fat to inhibit the migration of liquid oil from the filling to the chocolate shell.

WO2016038155A used tempering oil such as shea stearine mixed with liquid oil for the filling of chocolate and baked goods. The filling needs to be tempered before used, which crystallizes fast, and there is no fat bloom or separation when the filling is stored at 18-30 °C. However, the filling must be tempered, and the temperature of the baked goods should be close to the temperature of the tempered filling.

In hot weather such as summer, commercially available ordinary chocolate fillings and spreads are prone to oil and fat separation which will affect product quality. Fillings commonly used in baked goods such as bread and cake are injected after baking. Fillings fermented together with the bread dough and also stable after baking are rarely used. If the filling is baked at a high temperature, the oil and fat will melt into the pores of the dough, and will be absorbed by the dough, causing the filling dry.

### Summary of the Disclosure

The present disclosure prepares a low-saturation, high-temperature stable filling oil and fat composition by blending the raw material oils of filling. Therefore, one object of the present disclosure is to provide an oil and fat composition with a low level of saturated fatty acids. The sauce made from the composition is relatively stable, oil separation is difficult to occur at high temperature, the sauce can be used in baked goods such as bread, cookie and cake, and is stable after baking, and the filling is not easy to dry.

The oil and fat composition of the present disclosure optionally comprises an emulsifier and has the following characteristics:
(1) a solid fat content ≥ 8% at 10 °C ;
(2) a solid fat content ≥ 2% at 20 °C; and
(3) a solid fat content ≥ 2% when isothermally crystallized at 10 °C for 4 minutes.

In one or more embodiments, the oil and fat composition of the present disclosure does not comprise an emulsifier and has the following characteristics:
(1) a solid fat content ≥ 10% at 10 °C;
(2) a solid fat content ≥ 5% at 20 °C; and
(3) a solid fat content ≥ 3% when isothermally crystallized at 10 °C for 4 minutes.

In one or more embodiments, the solid fat content of the oil and fat composition that does not comprise an emulsifier is between 10% and 50% at 10 °C, preferably between 10% and 30%, more preferably between 10% and 20%, and more preferably between 10% and 15%.

In one or more embodiments, the solid fat content of the oil and fat composition that does not comprise an emulsifier is between 5% and 20% at 20 °C, preferably between 5% and 15%, more preferably between 5% and 10%, and more preferably between 5% and 8%.

In one or more embodiments, the solid fat content of the oil and fat composition that does not comprise an emulsifier, when isothermally crystallized at 10 °C for 4 minutes, is between 3% and 20%, preferably between 3% and 15%, more preferably between 3% and 10%, more preferably between 5% and 8%, and more preferably between 5% and 6%.

In one or more embodiments, the oil and fat composition that does not comprise an emulsifier also has any one or more of the following characteristics:
(4) a liquid oil content ≥ 50%, preferably ≥ 70%;
(5) a solid fat content ≥ 0.5%, preferably ≥ 1.5%, more preferably ≥ 3%;
(6) a content of saturated fatty acids (SAFA)≤ 60%, preferably ≤ 55%, preferably between 20% and 50%;
(7) a solid fat content between 2% and 10% at 25 °C, preferably between 3% and 7%, more preferably between 4% and 6%;
(8) a solid fat content between 1% and 8% at 30 °C, preferably between 2% and 6%, more preferably between 3% and 5%;
(9) a solid fat content between 1% and 5% at 35 °C, preferably between 1% and 4%, more preferably between 2% and 3%; and
(10) a solid fat content between 0.5% and 2% at 40 °C, preferably between 0.8% and 1.5%.

In one or more embodiments, the oil and fat composition comprises an emulsifier and has the following characteristics: (1) a solid fat content ≥ 8% at 10 °C; (2) a solid fat content ≥ 2% at 20 °C; and (3) a solid fat content ≥ 2% when isothermally crystallized at 10 °C for 4 minutes. Preferably, such oil and fat composition is a non-hydrogenated oil and fat composition.

In one or more embodiments, the solid fat content of the oil and fat composition comprising an emulsifier is between 8% and 50% at 10 °C, preferably between 8% and 30%, more preferably between 8% and 15%, and more preferably between 8% and 12%.

In one or more embodiments, the solid fat content of the oil and fat composition comprising an emulsifier is between 2% and 20% at 20 °C, preferably between 2% and 10%, and more preferably between 2% and 5%.

In one or more embodiments, the solid fat content of the oil and fat composition comprising an emulsifier, when isothermally crystallized at 10 °C for 4 minutes, is between 2% and 20%, preferably between 2% and 12%, more preferably between 2% and 8%, and more preferably between 2% and 4%.

In one or more embodiments, the oil and fat composition comprising an emulsifier also has any one or more of the following characteristics:
(4) a liquid oil content ≥ 70%; for example, between 70% and 90% or between 75% and 85%;
(5) a solid fat content ≥ 3%; for example, between 8% and 30% or between 10% and 25%;
(6) a content of saturated fatty acids (SAFA) ≤ 60%, preferably ≤ 55%, preferably between 20% and 50%;
(7) a solid fat content between 0.1% and 5% at 25 °C, preferably between 0.1% and 3%;
(8) a solid fat content between 0.1% and 3% at 30 °C, preferably between 0.1% and 1%;
(9) a solid fat content between 0.1% and 2% at 35 °C, preferably between 0.1% and 1%; and
(10) a solid fat content of 0 at 40 °C.

In one or more embodiments, the oil and fat composition comprises 10-40% of C16:0, 20-50% of C18:1C and 10-50% of C18:2C based on the total weight of the fatty acids comprised in the composition.

In one or more embodiments, the liquid oil is an oil and fat with a melting point lower than 10 °C, and is selected from one or more of the group consisting of: natural vegetable oils, such as palm oil, soybean oil, sunflower seed oil, peanut oil, rapeseed oil, cottonseed oil, corn oil, safflower seed oil, sesame oil, rice bran oil, flaxseed oil, olive oil, hazelnut oil, hickory oil, almond oil, cashew oil, macadamia oil, pistachio oil, palm kernel oil and coconut oil, and fractionated products or transesterification modified oils and fats of natural vegetable oils and fats.

In one or more embodiments, the solid fat refers to an oil and fat that appears solid or semi-solid at room temperature, and is selected from the group consisting of: one or more of palm stearine, palm kernel stearine, cottonseed oil fractionated stearine, beef tallow fractionated stearine, lard fractionated stearine, tallowtree seed fractionated stearine, shea butter and fractionated stearine thereof, shorea butter and fractionated stearine thereof, and mango butter and fractionated stearine thereof, and each single oil or mixed oils of these oils, transesterified oils obtained by transesterification of each single oil or mixed oils of these oils, fractionated oils of each single oil or mixed oils of these oils, or fully hydrogenated oils and fats of the above liquid oils and fats.

The present disclosure also provides a sauce, comprising the oil and fat composition described herein, or prepared using the oil and fat composition described herein as part or all of the oil and fat of the sauce.

In one or more embodiments, the content of the oil and fat composition described herein is 20-50% by weight of the sauce.

In one or more embodiments, the sauce comprises 20-50% of the oil and fat composition described herein and 50-80% of solid matter.

In one or more embodiments, the sauce is chocolate sauce or "Mixi" (the Chinese word for a mixture of powder from aleurone layer, subaleurone layer and germ of brown rice after removal of rice bran) sauce, wherein the chocolate sauce includes white chocolate sauce, milk/dark chocolate sauce, hazelnut chocolate sauce, coffee chocolate sauce, etc., and "Mixi" sauce includes pure "Mixi" sauce, sesame "Mixi" sauce, etc.

The chocolate sauce may comprise the oil and fat composition of the disclosure, sugar, cocoa powder, milk powder, nut and flavor substance.

The "Mixi" sauce may comprise the oil and fat composition of the disclosure, sugar, "Mixi" powder, milk powder, and flavor substance.

In one or more embodiments, the solid matter is selected from the group consisting of: sugar, cocoa powder, milk powder, nut paste, flavor substance powder, and emulsifying stabilizer.

In one or more embodiments, the flavor substance powder is selected from the group consisting of: "Mixi" powder (the Chinese word for a mixture of powder from aleurone layer, subaleurone layer and germ of brown rice after removal of rice bran), peanut protein powder, soy protein powder, matcha powder, strawberry powder, coffee powder, cheese powder, sesame powder, red dates powder, red bean powder and mung bean flour.

In one or more embodiments, the sugar content is 20-60% by weight of the sauce.

In one or more embodiments, the cocoa powder content is 0-40%, such as 0-30% or 5-20%, by weight of the sauce.

In one or more embodiments, the milk powder is selected from one or more of the group consisting of: whole milk powder, skimmed milk powder and whey powder, and the total content of the milk powder is 0-30%, such as 0-20% or 5-15%, by weight of the sauce.

In one or more embodiments, the content of the nut paste and the flavor substance powder is 0-40%, such as 0-30% or 5-20%, by weight of the sauce.

In one or more embodiments, the emulsifying stabilizer content is 0-10%, such as 0.4-5%, by weight of the sauce.

In one or more embodiments, the emulsifying stabilizer is selected from one or more of the group consisting of: soybean lecithin, polyglycerol polyricinoleate, and polyglycerol fatty acid ester.

In one or more embodiments, the sauce has any one or more of the following characteristics:
(1) storing at 35 °C for ≥ 20 days without oil separation, such as ≥ 25 days or ≥ 30 days;
(2) a hardness ≤ 1000 g at 25 °C, such as ≤ 700 g, or between 100g and 650 g; and
(3) a spreadability ≥ 100 g.sec at 25 °C, such as between 200 g.sec and 5000 g.sec or between 300 g.sec and 3000 g.sec.

The present disclosure also provides a filling comprising the oil and fat composition or the sauce described herein.

The present disclosure also provides a food comprising the oil and fat composition or the sauce or the filling described herein, preferably a chocolate product or a baked food.

The present disclosure also provides use of the oil and fat composition of the present disclosure in the preparation of a sauce for the preparation of the filling of a chocolate product or a baked food, or in the preparation of a chocolate product or a baked food.

The present disclosure also provides a method for the preparation of an oil and fat composition comprising a step of mixing raw oils to make the resulting mixture have the following characteristics:
(1) a solid fat content ≥ 8% at 10 °C, such as ≥ 10%;
(2) a solid fat content ≥ 2% at 20 °C, such as ≥ 5%; and
(3) a solid fat content ≥ 2% when isothermally crystallized at 10 °C for 4 minutes, such as ≥ 3%.

### BRIEF DESCRIPTION OF DRAWINGS

Fig. 1 shows the product status of the chocolate sauces of Examples 1-3 and Comparative Examples 1-3 stored at 35 °C for 1 month. The product status of Examples 1-3 are shown from left to right in the first row; the product status of Comparative Examples 1-3 are shown from left to right in the second row.
Fig. 2 shows the effect of using the Mixi sauces of Example 4 and Comparative Example 4 in baked stable bread filling. Example 4 is shown on the left, and Comparative Example 4 is shown on the right.
Fig. 3 shows the effect of using the "Mixi" sauces of Example 5 and Comparative Example 5 in baked stable bread filling. Example 5 is shown on the left, and Comparative Example 5 is shown on the right.
Fig. 4 shows the result of the chocolate sauces of Examples 6-8 and Comparative Examples 6-11 stored at 35 °C for 1 month.

### DETAILED DESCRIPTION

It should be understood that within the scope of the present disclosure, the above technical features of the present disclosure and the technical features specifically described in the following (eg, embodiments) can be combined with each other, thereby forming a preferred technical solution.

The present disclosure prepares a low-saturation oil and fat composition by blending the raw materialoils and optionally adding an emulsifer. The sauce made from the composition is relatively stable, oil separation is difficult to occur at high temperature, and the sauce can be used in baked food such as bread, cookie and cake, and after baking is also stable, and the filling is not easy to dry.

The oil and fat composition of the present disclosure has the following characteristics:
(1) a solid fat content ≥ 8% at 10 °C;
(2) a solid fat content ≥ 2% at 20 °C; and
(3) a solid fat content ≥ 2% when isothermally crystallized at 10 °C for 4 minutes. Preferably, the solid fat content of the oil and fat composition of the present disclosure at 10 °C is between 8% and 50%, such as between 8% and 30%, between 8% and 15%, between 8% and 12%, or between 10% and 50%, between 10% and 30%, between 10% and 20%, or between 10% and 15%.

Preferably, the solid fat content of the oil and fat composition of the present disclosure at 20 °C is between 2% and 20%, such as between 2% and 10%, between 2% and 5%, or between 5% and 20%, between 5% and 15%, between 5% and 10%, or between 5% and 8%.

Preferably, the solid fat content of the oil and fat composition of the present disclosure is between 2% and 20% when the composition is isothermally crystallized at 10 °C for 4 minutes, such as between 2% and 12%, between 2% and 8%, between 2% and 4%, or between 3% and 20%, between 3% and 15%, between 3% and 10%, between 5% and 8%, or between 5% and 6%.

Preferably, the content of saturated fatty acids (SAFA) of the oil and fat composition of the present disclosure is ≤ 60%, preferably ≤ 55%, preferably between 20% and 50%.

Preferably, the solid fat content of the oil and fat composition of the present disclosure at 25 °C is between 0.1% and 10%, such as between 0.1% and 3%, between 3% and 7% or between 4% and 6%.

Preferably, the solid fat content of the oil and fat composition of the present disclosure at 30 °C is between 0.1% and 8%, such as between 1% and 8%, between 2% and 6%, between 3% and 5% or between 0.1% and 3%, between 0.1% and 1%.

Preferably, the solid fat content of the oil and fat composition of the present disclosure at 35 °C is between 0.1% and 5%, such as between 1% and 5%, between 1% and 4%, between 2% and 3% or between 0.1% and 2%, between 0.1% and 1%.

Preferably, the solid fat content of the oil and fat composition of the present disclosure at 40 °C is between 0% and 2%, such as between 0.5% and 2%, between 0.8% and 1.5%, or is 0%.

Preferably, the oil and fat composition of the present disclosure comprises 10-40% (such as 18-40%) of C16:0, 20-50% of C18:1C and 10-50% of C18:2C based on the total weight of the fatty acids comprised in the composition.

The oil and fat composition of the present disclosure may be prepared from one or more vegetable oils. The raw material oil may be any edible vegetable oil and its fractionated or modified products, and may also be used alone or in combination, as long as the obtained composition meets the requirements of the present disclosure for the solid fat contents (SFCs) at different temperatures and the solid fat content after isothermal crystallization at 10 °C for 4 minutes.

For example, the oil and fat composition of the present disclosure may comprise liquid oil and solid fat. The liquid oil herein is an oil and fat with a melting point below 10 °C, and may be selected from the group consisting of: natural vegetable oils, such as palm oil, soybean oil, sunflower seed oil, peanut oil, rapeseed oil, cottonseed oil, corn oil, safflower seed oil, sesame oil, rice bran oil, flaxseed oil, olive oil, hazelnut oil, hickory oil, almond oil, cashew oil, macadamia oil, pistachio oil, palm kernel oil and coconut oil, and fractionated products or transesterified oils and fats of natural vegetable oils and fats. The solid fat is an oil and fat that appears solid or semi-solid at room temperature, and may be selected from the group consisting of: one or more of palm oil fractionated stearine, palm kernel oil fractionated stearine, cottonseed oil fractionated stearine, beef tallow fractionated stearine, lard fractionated stearine, tallowtree seed fractionated stearine, shea butter and fractionated stearine thereof, shorea butter and fractionated stearine thereof, and mango butter and fractionated stearine thereof, and each single oil or mixed oils of these oils, transesterified oils obtained by transesterification of each single oil or mixed oils of these oils, fractionated oils of each single oil or mixed oils of these oils, or fully hydrogenated fats and oils of the above liquid oils and fats. A mixture of any one or more of the above liquid oils may be used, and a mixture of any one or more of the above solid fats may be used.

In the oil and fat composition of the present disclosure, the content of liquid oil and fat may be 50% or more, for example, 70% or more, 80% or more, 85% or more, even 90% or more. In some embodiments, the content of liquid oil and fat in the oil and fat composition of the present disclosure is 50-98%, such as 70-98%, 80-98%, 85-98%, 75-97%, 70-90% or 75-85%.

In the oil and fat composition of the present disclosure, the content of solid fat is ≥ 0.5%, preferably ≥ 1.5%, preferably 3% or more, for example, 8% or more or 10% or more. In some embodiments, the content of solid fat in the oil and fat composition of the present disclosure is 3-25%, such as 3-22%, 3-15%, or 10-25%.

In some embodiments, the oils and fats used to prepare the oil and fat composition of the present disclosure comprise, in particular, any one or more liquid oils and fats and any one or more solid fats selected from the group consisting of palm olein, soybean oil, palm oil fractionated stearine, fully hydrogenated rapeseed oil, and fully hydrogenated soybean oil.

Generally, the iodine value (IV) of the palm oil or its fraction used for preparing the oil and fat composition of the present disclosure may be 30 or more, for example, 35 or more, 40 or more or 45 or more. For example, the IV of the used palm olein may be ≥ 50, such as ≥ 60, or between 55 and 70; the IV of the palm oil fractionated stearine may be ≥ 35, such as ≥ 45, or between 40 and 60. Palm oil medium-melting-point fractionated product, preferably with an IV ≥ 40, for example between 40 and 55 may also be used.

The emulsifier suitable for the present disclosure may be an emulsifier known in the art for oils and fats, including but not limited to one or more from monoglycerides, mono- and diglycerides, and composite emulsifiers formed by mono- and diglycerides and triglycerides. Preferably, the fatty acids of the emulsifier are any saturated or unsaturated fatty acids with carbon numbers of 4-22. Generally, the content of emulsifier is ≥ 2%, preferably in the range of 2-20%, 2-10% or 3-6%, based on the total weight of the oil and fat composition.

In some embodiments, the oil and fat composition of the present disclosure does not comprise an emulsifier and has the following characteristics:
(1) a solid fat content ≥ 10% at 10 °C;
(2) a solid fat content ≥ 5% at 20 °C; and
(3) a solid fat content ≥ 3% when isothermally crystallizated at 10 °C for 4 minutes.

Preferably, the solid fat content of the oil and fat composition that does not comprise an emulsifier is between 10% and 50% at 10 °C, preferably between 10% and 30%, more preferably between 10% and 20%, and more preferably between 10% and 15%.

Preferably, the solid fat content of the oil and fat composition that does not comprise an emulsifier is between 5% and 20% at 20 °C, preferably between 5% and 15%, more preferably between 5% and 10%, and more preferably between 5% and 8%.

Preferably, the solid fat content of the oil and fat composition that does not comprise an emulsifier, when isothermally crystallized at 10 °C for 4 minutes, is between 3% and 20%, preferably between 3% and 15%, more preferably between 3% and 10%, more preferably between 5% and 8%, and more preferably between 5% and 6%.

For example, in some embodiments, the oil and fat composition that does not comprise an emulsifier has a solid fat content between 10% and 20% at 10 °C, perferably between 10% and 15%; a solid fat content between 5% and 10% at 20 °C, perferably between 5% and 8%; and a solid fat content between 5% and 8%, perferably between 5% and 6%, when isothermally crystallized at 10 °C for 4 minutes.

In some embodiments, the oil and fat composition that does not comprise an emulsifier also has any one or more of the following characteristics:
(4) a liquid oil content ≥ 50%, preferably ≥ 70%; for example, between 80% and 98% or between 85% and 98%;
(5) a solid fat content ≥ 0.5%, preferably ≥ 1.5%, more preferably ≥ 3%; for example, between 1.5% and 15% or between 3% and 15%;
(6) a content of saturated fatty acids (SAFA) ≤ 60%, preferably ≤ 55%, preferably between 20% and 50%;
(7) a solid fat content between 2% and 10% at 25 °C, preferably between 3% and 7%, more preferably between 4% and 6%;
(8) a solid fat content between 1% and 8% at 30 °C, preferably between 2% and 6%, more preferably between 3% and 5%;
(9) a solid fat content between 1% and 5% at 35 °C, preferably between 1% and 4%, more preferably between 2% and 3%;
(10) a solid fat content between 0.5% and 2% at 40 °C, preferably between 0.8% and 1.5%; and
(11) the oil and fat composition comprises 10-40% of C16:0, 20-50% of C18:1C and 10-50% of C18:2C based on the total weight of the fatty acids comprised in the composition.

In this disclosure, SAFA refers to all saturated fatty acids with carbon numbers of 4-24; SFC when isothermally crystallized at 10 °C for 4 minutes refers to the solid fat content when the completely melted oil and fat is isothermally crystallized at 10 °C for 4 minutes.

In some embodiments, the oil and fat composition that does not comprise an emulsifier of the present disclosure may have the following characteristics (1)-(3):
(1) a solid fat content betweem 12% and 15% at 10 °C;
(2) a solid fat content between 5% and 7% at 20 °C; and
(3) a solid fat content between 5% and 6% when isothermally crystallized at 10 °C for 4 minutes; and
optionally has any one or more of the following characteristics:
(4) a liquid oil content ≥ 80%, such as between 85% and 98%;
(5) a solid fat content ≥ 3%, such as between 3% and 15%;
(6) a content of saturated fatty acids (SAFA) between 35% and 45%;
(7) a solid fat content between 4% and 6% at 25 °C;
(8) a solid fat content between 3% and 5% at 30 °C;
(9) a solid fat content between 2% and 3% at 35 °C;
(10) a solid fat content between 0.8% and 1.5% at 40 °C; and
(11) that the oil and fat composition comprises 30-40% of C16:0, 40-50% of C18:1C and 10-20% of C18:2C based on the total weight of the fatty acids comprised in the composition.

In some embodiments, the oil and fat composition that does not comprise an emulsifier of the present disclosure has the following characteristics:
(1) a solid fat content betweem 10% and 13% at 10 °C;
(2) a solid fat content between 5% and 7% at 20 °C; and
(3) a solid fat content between 5% and 6% when isothermally crystallized at 10 °C for 4 minutes; and
optionally has any one or more of the following characteristics:
(4) a liquid oil content ≥ 80%, such as between 85% and 98%;
(5) a solid fat content ≥ 10%, such as between 3% and 15%;
(6) a content of saturated fatty acids (SAFA) between 20% and 30%;
(7) a solid fat content between 4% and 6% at 25 °C;
(8) a solid fat content between 3% and 5% at 30 °C;
(9) a solid fat content between 1.5% and 2.5% at 35 °C;
(10) a solid fat content between 0.8% and 1.5% at 40 °C; and
(11) the oil and fat composition comprises 10-20% of C16:0, 20-30% of C18:1C and 40-50% of C18:2C based on the total weight of the fatty acids comprised in the composition.

In some embodiments, the oil and fat composition that does not comprise an emulsifier of the present disclosure is a mixture of palm olein, palm oil fractionated stearine and fully hydrogenated rapeseed oil, and their mass ratio may be in the range of 20-25:1-3:1. In some embodiments, the oil and fat composition is a mixture of palm olein and fully hydrogenated soybean oil, and their mass ratio may be in the range of 95-99:1-5. In some embodiments, the oil and fat composition is a mixture of soybean oil, palm oil fractionated stearine and fully hydrogenated rapeseed oil, and their mass ratio may be in the range of 20-25:1-3:1.

The inventor of the present disclosure found that in some embodiments, if an emulsifier is added to the oil and fat composition of the present disclosure having or consisting of the oil and fat described herein, the solid fat content of the oil and fat composition at 10 °C can be as low as 8%, the solid fat content at 20 °C can be as low as 2%, and the solid fat content when isothermally crystallized at 10 °C for 4 minutes can be as low as 2%, and the sauce prepared from the oil and fat composition still has very excellent stability and oil separation is difficult to occur at high temperature.

Therefore, the present disclosure provides an oil and fat composition comprising an emulsifier, and the composition has the following characteristics: (1) a solid fat content ≥ 8% at 10 °C; (2) a solid fat content ≥ 2% at 20 °C; and (3) a solid fat content ≥ 2% when isothermally crystallized at 10 °C for 4 minutes. Preferably, the oil and fat composition is a non-hydrogenated oil and fat composition.

Preferably, the solid fat content of the oil and fat composition comprising an emulsifier is between 8% and 50% at 10 °C, preferably between 8% and 30%, more preferably between 8% and 15%, and more preferably between 8% and 12%.

Preferably, the solid fat content of the oil and fat composition comprising an emulsifier is between 2% and 20% at 20 °C, preferably between 2% and 10%, and more preferably between 2% and 5%.

Preferably, the solid fat content of the oil and fat composition comprising an emulsifier, when isothermally crystallized at 10 °C for 4 minutes, is between 2% and 20%, preferably between 2% and 12%, more preferably between 2% and 8%, and more preferably between 2% and 4%.

For example, in some embodiments, the oil and fat composition comprising an emulsifier has a solid fat content between 8% and 15% at 10 °C, perferably between 8% and 11%; a solid fat content between 2% and 10% at 20 °C, perferably between 2% and 5%; and a solid fat content between 2% and 8%, perferably between 2% and 4%, when isothermally crystallized at 10 °C for 4 minutes.

In some embodiments, the oil and fat composition comprising an emulsifier also has any one or more of the following characteristics:
(4) a liquid oil content ≥ 70%; for example, between 70% and 90% or between 75% and 85%;
(5) a solid fat content ≥ 8%; for example, between 8% and 30% or between 10% and 25%;
(6) a content of saturated fatty acids (SAFA) ≤ 60%, preferably ≤ 55%, preferably between 20% and 50%;
(7) a solid fat content between 0.1% and 5% at 25 °C, preferably between 0.1% and 3%;
(8) a solid fat content between 0.1% and 3% at 30 °C, preferably between 0.1% and 1%;
(9) a solid fat content between 0.1% and 2% at 35 °C, preferably between 0.1% and 1%;
(10) a solid fat content of 0 at 40 °C; and
(11) that the oil and fat composition comprises 18-40% of C16:0, 20-50% of C18:1C and 10-50% of C18:2C based on the total weight of the fatty acids comprised in the composition.

In some embodiments, the oil and fat composition comprising an emulsifier of the present disclosure may have the following characteristics (1)-(3):
(1) a solid fat content betweem 8% and 15% at 10 °C;
(2) a solid fat content between 2% and 10% at 20 °C; and
(3) a solid fat content between 2% and 8% when isothermally crystallized at 10 °C for 4 minutes; and
optionally have one or more of the following characteristics:
(4) a liquid oil content between 70% and 90%;
(5) a solid fat content between 10% and 25%;
(6) a content of saturated fatty acids (SAFA) between 20% and 50%;
(7) a solid fat content between 0.1% and 3% at 25 °C;
(8) a solid fat content between 0.1% and 1% at 30 °C;
(9) a solid fat content between 0.1% and 1% at 35 °C;
(10) a solid fat content of 0 at 40 °C; and
(11) that the oil and fat composition comprises 18-40% of C16:0, 20-50% of C18:1C and 10-50% of C18:2C based on the total weight of the fatty acids comprised in the composition.

In some embodiments, the oil and fat composition comprising an emulsifier of the present disclosure has the following characteristics:
(1) a solid fat content betweem 8% and 12% at 10 °C;
(2) a solid fat content between 2% and 5% at 20 °C; and
(3) a solid fat content between 2% and 4% when isothermally crystallized at 10 °C for 4 minutes; and
optionally has any one or more of the following characteristics:
(4) a liquid oil content between 75% and 85%;
(5) a solid fat content between 10% and 25%;
(6) a content of saturated fatty acids (SAFA) between 20% and 50%;
(7) a solid fat content between 0.1% and 3% at 25 °C;
(8) a solid fat content between 0.1% and 1% at 30 °C;
(9) a solid fat content between 0.1% and 1% at 35 °C;
(10) a solid fat content of 0 at 40 °C; and
(11) that the oil and fat composition comprises 18-35% of C16:0, 25-50% of C18:1C and 10-45% of C18:2C based on the total weight of the fatty acids comprised in the composition.

In some embodiments, the oil and fat composition comprising an emulsifier of the present disclosure is a mixture of palm olein and palm oil fractionated stearine, and their mass ratio may be 3-9, such as 4-8 or 4-7.54. In some embodiments, the oil and fat composition comprising an emulsifier of the present disclosure is a mixture of soybean oil and palm oil fractionated stearine, and their mass ratio may be 1-5, such as 3-4.

For example, in some embodiments, the oil and fat composition of the present disclosure is a mixture of liquid oil (especially palm oil or soybean oil) and solid fat (especially palm oil fractionated stearine) and emulsifier, and their mass ratio may be in the range of 75-85:10-25:2-5.

The inventor of the presnet disclosure found that when an oil and fat composition with the solid fat content at 10 °C, the solid fat content at 20 °C and the solid fat content when isothermally crystallized at 10 °C for 4 minutes being controlled within the ranges described herein is used to prepare a filling or a sauce, the prepared filling or sauce is relatively stable, oil separation is difficult to occur at high temperature, and the filling can be used in baked food such as bread, cookie and cake, and is stable after baking, and the filling is difficult to dry. Therefore, the present disclosure provides a method for the preparation of a oil and fat composition comprising a step of mixing raw oils to make the resulting mixture meet the ranges of the solid fat content at 10 °C, the ranges of the solid fat content at 20 °C and the ranges of the solid fat content when isothermally crystallized at 10 °C for 4 minutes described herein.

The raw material oils may be various conventional edible oils in the art, including but not limited to the various liquid oils and solid fats described above. Preferably, the content of liquid oil and the content of solid fat in the prepared oil and fat composition are also within the ranges described herein. The amount of raw material oils may be adjusted according to the desired oil and fat properties, as long as the prepared fat and oil composition has a solid fat content at 10 °C, a solid fat content at 20 °C, and a solid fat content when isothermally crystallized at 10 °C for 4 minutes within the ranges described herein.

In some embodiments, it is preferred that the resulting mixture also has any one or more of the characteristics described in items (4) to (11) described in any of the foregoing embodiments herein.

Based on the characteristics of the oil and fat composition to be obtained by the present disclosure, a person skilled in the art may use conventional technical means in the art to prepare the oil and fat composition. For example, the oil and fat composition of the present disclosure can be obtained by selecting appropriate types and amounts of oils and fats according to the characteristics of the oil and fat composition desired to be obtained, and uniformly mixing them using a conventional method. If necessary, various performance parameters of the obtained oil and fat composition can be tested according to conventional technical means in the art or with reference to the various test methods described herein to ensure that the prepared oil and fat composition has the various characteristics described herein.

The oil and fat composition of the present invention can be used to replace part or all of the oils and fats conventionally used for sauces, and can be used to prepare sauces or fillings. The sauce may be a filling, a spread or a dipping sauce. The other ingredients of the sauce may be kept unchanged, and be conventional components of sauce. Specifically, the sauce generally comprises the oil and fat composition of the present disclosure and solid matter. The content of the oil and fat composition may be between 20% and 50%, and the content of solid matter may be between 50% and 80%.

The solid matter in the sauce may be selected from one or more of the group consisting of sugar, cocoa powder, milk powder, nut paste, flavor substance powder and emulsifying stabilizer. The nut paste may include any one or any mixture of pastes prepared from nuts such as hazelnut, macadamia nut, cashew, pistachio, pecan, and almond. The flavor substance powder may be selected from one or more of the group consisting of "Mixi" powder, peanut protein powder, soy protein powder, matcha powder, strawberry powder, coffee powder, cheese powder, sesame powder, red dates powder, red bean powder and mung bean flour. The milk powder may be selected from one or more of the group consisting of whole milk powder, skimmed milk powder and whey powder. The emulsifying stabilizer may be selected from one or more of the group consisting of soybean lecithin, polyglycerol polyricinoleate, and polyglycerol fatty acid ester.

Generally, by weight of the sauce, the sugar content is 20-60%; the cocoa powder content is 0-40%, for example 0-30% or 5-20%; the milk powder content is 0-30%, such as 0-20% or 5-15%; the content of nut paste and flavor substance powder is 0-40%, such as 0-30% or 5-20%; the content of emulsifying stabilizer is 0-10%, such as 0.4-5% or 0.4-1%.

The sauce may be chocolate sauce or "Mixi" sauce, wherein the chocolate sauce includes white chocolate sauce, milk/dark chocolate sauce, hazelnut chocolate sauce, coffee chocolate sauce, etc., the "Mixi" sauce includes pure "Mixi" sauce, sesame fine broken rice sauce, etc. The chocolate sauce may comprise the oil and fat composition of the disclosure, sugar, cocoa powder, milk powder, nut and flavor substance. The "Mixi" sauce may comprise the oil and fat composition of the disclosure, sugar, "Mixi" powder, milk powder and flavor substance.

A conventional ball mill or three-roller machine + refiner can be used to prepare the sauce of the present disclosure. Generally, an appropriate amount of emulsifying stabilizer is added before processing.

The sauce of the disclosure may have any one or more of the following characteristics:
(1) storing at 35 °C for ≥ 20 days without oil separation, such as ≥ 25 or ≥ 30 days;
(2) a hardness ≤ 1000 g at 25 °C, such as ≤ 700 g, or between 100g and 650 g, or between 200g and 400 g, or between 250g and 400 g, or between 300g and 400 g, or between 200g and 300 g; and
(3) a spreadability ≥ 100 g.sec at 25 °C, such as between 200 g.sec and 5000 g.sec, between 300 g.sec and 3000 g.sec, between 500 g.sec and 1500 g.sec, or between 700 g.sec and 1200 g.sec, or between 500 g.sec and 800 g.sec, or between 600 g.sec and 700 g.sec.

The sauce of the present disclosure can be used to prepare fillings for food, including fillings for chocolate products, or fillings for baked foods. Therefore, the present disclosure provides a filling comprising the oil and fat composition or the sauce described herein. The filling can be of suitable shape and size.

The present disclosure also provides a food comprising the oil and fat composition or the sauce or the filling described herein, preferably a chocolate product, a baked food or a food spread with sauce. The baked food may be various breads, cookies, wafers and cakes, etc.

The present disclosure also provides use of the oil and fat composition of the present disclosure in the preparation of a sauce for the preparation of a filling of a chocolate product or a baked food, or in the preparation of a chocolate product or a baked food, or in improving or enhancing the stability of sauces or fillings after baking, especially the resistance to oil separation at high temperature.

### Examples

In the following examples of the present disclosure, the vegetable oils used are all from Kerry Specialty Fats (Shanghai) Ltd.

The test methods adopted in the following examples are as follows:
Composition of fatty acid: fatty acid methyl ester was prepared according to AOCS Ce 2-66, chromatography column: CP-Si188 quartz capillary column (50 m×0.25 mm, 0.2 m); temperature-rising program: kept at 80 °C for 2 min, raised to 120 °C at 10 °C/min, raised to 180 °C at 5 °C/min, kept for 2 min, and then raised to 230 °C at 25 °C/min, kept for 5 min; carrier gas (He) flow rate 1.5 mL/min, pressure 0.1 MPa, injection volume 0.2 µL; split ratio 75: 1.

Solid fat curve: the solid fat content (SFC) of sample was determined by pulse nuclear magnetic resonance (p-NMR). 4 ml of sample was put into a special NMR glass tube, placed in 60 °C water bath for 30 min, transfered to 0 °C water bath and kept for 60 min, and then kept in thermostatic water bath kettles at 10, 20, 25, 30, 35 and 40 °C for 30 min respectively, and the SFCs at different temperatures were determined.

Isothermal crystallization solid fat curve at 10 °C: 4 ml sample was loaded in a special NMR glass tube, kept in 60 °C water bath for 30 min, and transfered to 10 °C water bath with the timing started, and the SFCs at different times were determined when isothermal crystallization took place for 2, 4, 6, 8, 10, 15, 20, 25, 30 min.

Hardness at 25 °C: 50g of chocolate sauce was directly injected into a 100ml disposable pudding box, then placed at 20-25 °C for 2-3 days for stabilization, then placed at 25 °C for 2 weeks, and then a hardness test was conducted. The hardness of the chocolate sauce was measured using a texture analyzer. The test conditions of the texture analyzer were: HDP-SR probe, using the depression mode with a depression depth of 10 mm, and a test speed of 1 mm/sec. The maximum force born by the probe during depression was recorded as the hardness of the chocolate sauce.

Spreadability at 25 °C: 50g of chocolate sauce was directly injected into a 100ml disposable pudding box, then placed at 20-25 °C for 2-3 days for stabilization, then placed at 25 °C for 2 weeks, then a spreadability test was conducted. The spreadability was also measured using a texture analyzer, and the test conditions were consistent with the test conditions for hardness. The spreadability value was calculated using the peak area value of depression force curve with time as the horizontal axis.

35 °C storage experiment and sensory evaluation: 50g of chocolate sauce was directly injected into a 100ml disposable pudding box, and then placed at 20-25 °C for 2-3 days for stabilization. The stabilized chocolate sauce was store in a 35 °C incubator. The condition of the sauce was observed every other week, and sensory evaluations on oil separation of the chocolate sauce were made by 10 or more assessors. The oil separation was scored with 0-40 points, 0 means there is no oil separation; 10 means there is only a little oil separation on the edge; 20 means there is partial oil separation and uneven surface; 30 means there is thin layer oil separation and uneven surface; 40 means there is obvious thick oil layer. The lower the score is, the less oil separation of the sauce is to occur, and the higher the score is, the more serious the oil separation on the surface is.

### Preparation Example 1: Preparation and performance test of oil and fat composition

Oil and fat composition 1: a mixture of palm olein (IV ≥ 64), palm oil fractionated stearine (IV = 48) and fully hydrogenated rapeseed oil at a mass ratio of 22:2:1.

After melting and mixing, the fatty acid composition, the solid fat content and the SFC when isothermally crystallized at 10 °C for 4 minutes of Oil and fat composition 1 were measured.

Oil and fat composition 2: a mixture of palm olein (IV ≥ 64) and fully hydrogenated soybean oil at a mass ratio of 97:3.

After melting and mixing, the fatty acid composition, the solid fat content and the SFC when isothermally crystallized at 10 °C for 4 minutes of Oil and fat composition 2 were measured.

Oil and fat composition 3: a mixture of soybean oil, palm oil fractionated stearine (IV = 48) and fully hydrogenated rapeseed oil at a mass ratio of 22:2:1.

After melting and mixing, the fatty acid composition, the solid fat content and the SFC when isothermally crystallized at 10 °C for 4 minutes of Oil and fat composition 3 were measured.

Oil and fat composition 4: a mixture of palm olein (IV ≥ 64) and palm oil medium-melting-point fraction (IV = 45) at a mass ratio of 7:3.

After melting and mixing, the fatty acid composition, the solid fat content and the SFC when isothermally crystallized at 10 °C for 4 minutes of Oil and fat composition 4 were measured.

Oil and fat composition 5: a mixture of palm olein (IV ≥ 64) and fully hydrogenated rapeseed oil at a mass ratio of 98.5:1.5.

After melting and mixing, the fatty acid composition, the solid fat content and the SFC when isothermally crystallized at 10 °C for 4 minutes of Oil and fat composition 5 were measured.

Oil and fat composition 6: a mixture of palm olein (IV = 54), soybean oil and fully hydrogenated rapeseed oil at a mass ratio of 59:40:1.

After melting and mixing, the fatty acid composition, the solid fat content and the SFC when isothermally crystallized at 10 °C for 4 minutes of Oil and fat composition 6 were measured.

Oil and fat compositions 1-6 were measured for the fatty acid compositions (FAC), the SFCs at different temperatures and the SFCs when isothermally crystallized at 10 °C for 4 minutes according to the methods described above. The results are shown in Table 1 below.

**Table 1**

| Oil and fat composition | 1 | 2 | 3 | 4 | 5 | 6 |
|---|---|---|---|---|---|---|
| FAC, % | | | | | | |
| C12:0 | 0.2 | 0.2 | 0.1 | 0.6 | 0.4 | 0.3 |
| C14:0 | 0.9 | 1.0 | 0.2 | 1.1 | 1.0 | 0.6 |
| C16:0 | 33.0 | 32.2 | 13.0 | 36.8 | 33.7 | 27.7 |
| C18:0 | 6.0 | 4.9 | 5.9 | 4.2 | 4.5 | 4.7 |
| C18:1T | 0.1 | 0.1 | 0.0 | 0.0 | 0.0 | 0.0 |
| C18:1C | 44.4 | 45.8 | 24.2 | 44.1 | 46.3 | 35.9 |
| C18:2T | 0.5 | 0.6 | 0.3 | 0.5 | 0.5 | 0.3 |
| C18:2C | 12.5 | 12.5 | 46.5 | 11.5 | 12.2 | 26.4 |
| C18:3T | 0.0 | 0.0 | 0.4 | 0.1 | 0.0 | 0.0 |
| C18:3C | 0.6 | 0.2 | 4.9 | 0.2 | 0.2 | 2.4 |
| C22:0 | 1.0 | 1.4 | 2.1 | 0.1 | 0.7 | 0.6 |
| SAFA, % | 41.2 | 40.3 | 22.6 | 43.3 | 40.8 | 34.6 |

| SFC, % | | | | | | |
|---|---|---|---|---|---|---|
| 10 (°C) | 12.6 | 14.5 | 11 | 20.4 | 7.8 | 13.3 |
| 20 (°C) | 6.0 | 6.9 | 6 | 3.7 | 2.2 | 1.7 |
| 25 (°C) | 5.0 | 5.6 | 4.5 | 1.2 | 1.5 | 0.9 |
| 30 (°C) | 3.7 | 4.0 | 3.7 | 0.1 | 0.9 | 0.8 |
| 35 (°C) | 2.5 | 2.8 | 2 | 0.0 | 0.4 | 0.1 |
| 40 (°C) | 0.9 | 1.0 | 0.9 | 0.0 | 0.1 | 0.0 |

| SFC, isothermal crystallization at 10 °C, % | | | | | | |
|---|---|---|---|---|---|---|
| 4 min | 5.4 | 5.8 | 5.2 | 2.0 | 2.3 | 1.8 |

### Example 1

A chocolate sauce was prepared by combining Oil and fat compostion 1, sugar, alkalized cocoa powder and skimmed milk powder using a ball mill or three-roller machine + refiner, and adding 0.5% of soybean lecithin before discharging. The mass percentages of Oil and fat composition 1, sugar, alkalized cocoa powder and skimmed milk powder are 40%, 40%, 10% and 10%.

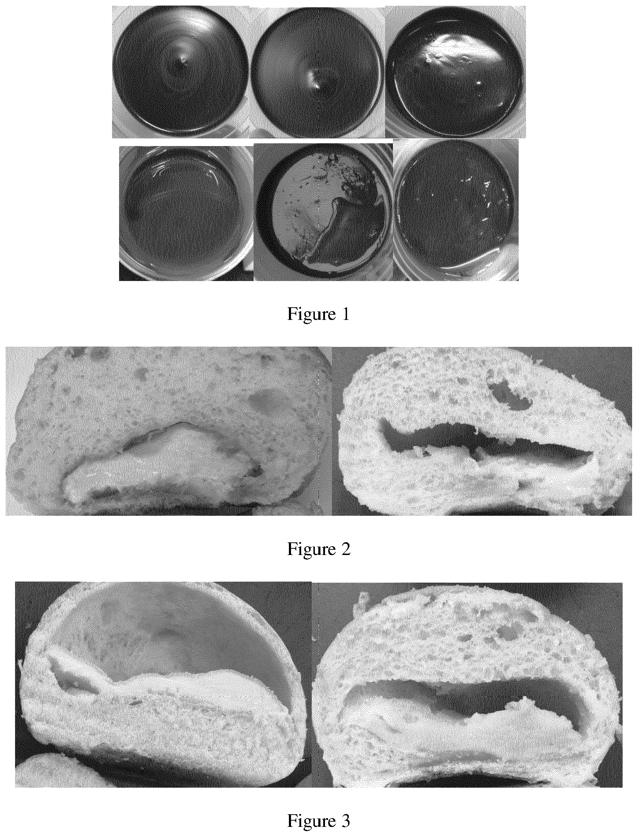

According to the methods described above, the results of 35 °C storage experiment of the chocolate sauce were determined, sensory evaluation on oil separation was conducted, and the hardness and spreadability of the chocolate sauce at 25 °C were determined. The results are shown in Table 2 and 3 below and Figure 1 (first row, first picture).

### Example 2

A chocolate sauce was prepared by combining Oil and fat compostion 2, sugar, alkalized cocoa powder and skimmed milk powder using a ball mill or three-roller machine + refiner, and adding 0.5% of soybean lecithin before discharging. The mass percentages of Oil and fat composition 2, sugar, alkalized cocoa powder and skimmed milk powder are 40%, 40%, 10% and 10%.

According to the methods described above, the results of 35 °C storage experiment of the chocolate sauce were determined, sensory evaluation on oil separation was conducted, and the hardness and spreadability of the chocolate sauce at 25 °C were determined. The results are shown in Table 2 and 3 below and Figure 1 (first row, second picture).

### Example 3

A chocolate sauce was prepared by combining Oil and fat compostion 3, sugar, alkalized cocoa powder and skimmed milk powder using a ball mill or three-roller machine + refiner, and adding 0.5% of soybean lecithin before discharging. The mass percentages of Oil and fat composition 3, sugar, alkalized cocoa powder and skimmed milk powder are 40%, 40%, 10% and 10%.

According to the methods described above, the results of 35 °C storage experiment of the chocolate sauce were determined, sensory evaluation on oil separation was conducted, and the hardness and spreadability of the chocolate sauce at 25 °C were determined. The results are shown in Table 2 and 3 below and Figure 1 (first row, third picture).

### Comparative Example 1

A chocolate sauce was prepared by combining Oil and fat compostion 4, sugar, alkalized cocoa powder and skimmed milk powder using a ball mill or three-roller machine + refiner, and adding 0.5% of soybean lecithin before discharging. The mass percentages of Oil and fat composition 4, sugar, alkalized cocoa powder and skimmed milk powder are 40%, 40%, 10% and 10%.

According to the methods described above, the results of 35 °C storage experiment of the chocolate sauce were determined, sensory evaluation on oil separation was conducted, and the hardness and spreadability of the chocolate sauce at 25 °C were determined. The results are shown in Table 2 and 3 below and Figure 1 (second row, first picture).

### Comparative Example 2

A chocolate sauce was prepared by combining Oil and fat compostion 5, sugar, alkalized cocoa powder and skimmed milk powder using a ball mill or three-roller machine + refiner, and adding 0.5% of soybean lecithin before discharging. The mass percentages of Oil and fat composition 5, sugar, alkalized cocoa powder and skimmed milk powder are 40%, 40%, 10% and 10%.

According to the methods described above, the results of 35 °C storage experiment of the chocolate sauce were determined, sensory evaluation on oil separation was conducted, and the hardness and spreadability of the chocolate sauce at 25 °C were determined. The results are shown in Tables 2 and 3 below and Figure 1 (second row, second picture).

### Comparative Example 3

A chocolate sauce was prepared by combining Oil and fat compostion 6, sugar, alkalized cocoa powder and skimmed milk powder using a ball mill or three-roller machine + refiner, and adding 0.5% of soybean lecithin before discharging. The mass percentages of Oil and fat composition 6, sugar, alkalized cocoa powder and skimmed milk powder are 40%, 40%, 10% and 10%.

According to the methods described above, the results of 35 °C storage experiment of the chocolate sauce were determined, sensory evaluation on oil separation was conducted, and the hardness and spreadability of the chocolate sauce at 25 °C were determined. The results are shown in Tables 2 and 3 below and Figure 1 (second row, third picture).

**Table 2: Evaluation on oil separation of chocolate sauce stored at 35 °C for 1 month**

| | Evaluation on oil separation |
|---|---|
| Example 1 | 0 |
| Example 2 | 0 |
| Example 3 | 0 |
| Comparative Example 1 | 40 |
| Comparative Example 2 | 25 |
| Comparative Example 3 | 20 |

**Table 3: Hardness and spreadability of chocolate sauce placed at 25 °C for 2 weeks**

| | Hardness at 25 °C (g) | Spreadability at 25 °C (g.sec) |
|---|---|---|
| Example 1 | 321.4 | 854.1 |
| Example 2 | 376.1 | 1028.9 |
| Example 3 | 300.6 | 750.0 |
| Comparative Example 1 | 13.7 | 35.6 |
| Comparative Example 2 | 90.0 | 240.0 |
| Comparative Example 3 | 150.0 | 380.7 |

It can be seen from Table 2 and Figure 1 that the chocolate sauces of Example 1, Example 2 and Example 3 had no oil separation, and the surfaces were still relatively bright and smooth; the chocolate sauces prepared in Comparative Example 1, Comparative Example 2 and Comparative Example 3 all showed different degrees of oil separation, in which Comparative Example 1 showed the most obvious oil separation, with a thick oil layer on the surface. The oil and fat used in the chocolate sauce need a certain amount of liquid oil to ensure the spreading operable; also need a certain amount of solid fat to maintain a suitable crystalline skeleton to ensure the chocolate sauce stable. The chocolate sauces of Comparative Example 2 and Comparative Example 3 also showed oil separation after being stored at 35 °C for 1 month.

### Example 4

A "Mixi" sauce was prepared by combining Oil and fat compostion 1, sugar and "Mixi" powder using a ball mill or three-roller machine + refiner, and adding 0.4% of soybean lecithin before discharging. The mass percentages of Oil and fat composition 1, sugar and "Mixi" powder are 40%, 42% and 18%. 20 g of "Mixi" sauce was stuffed in 50 g of bread dough, which was leavened at 38 °C for 40-50 minutes, then baked at an upper temperature of 190 °C and a lower temperature of 175 °C for 15-18 minutes in an oven. The results are shown in the left figure of Figure 2.

### Example5

A "Mixi" sauce was prepared by combining Oil and fat compostion 2, sugar and "Mixi" powder using a ball mill or three-roller machine + refiner, and adding 0.4% of soybean lecithin before discharging. The mass percentages of Oil and fat composition 2, sugar and "Mixi" powder are 40%, 42% and 18%. 20 g of "Mixi" sauce was stuffed in 50 g of bread dough, which was leavened at 38 °C for 40-50 minutes, then baked at an upper temperature of 190 °C and a lower temperature of 175 °C for 15-18 minutes in an oven. The results are shown in the left figure of Figure 3.

### Comparative Example 4

A "Mixi" sauce was prepared by combining Oil and fat compostion 4, sugar and "Mixi" powder using a ball mill or three-roller machine + refiner, and adding 0.4% of soybean lecithin before discharging. The mass percentages of Oil and fat composition 4, sugar and "Mixi" powder are 40%, 42% and 18%. 20 g of "Mixi" sauce was stuffed in 50 g of bread dough, which was leavened at 38 °C for 40-50 minutes, then baked at an upper temperature of 190 °C and a lower temperature of 175 °C for 15-18 minutes in an oven. The results are shown in the right figure of Figure 2.

### Comparative Example 5

A "Mixi" sauce was prepared by combining Oil and fat compostion 6, sugar and "Mixi" powder using a ball mill or three-roller machine + refiner, and adding 0.4% of soybean lecithin before discharging. The mass percentages of Oil and fat composition 6, sugar and "Mixi" powder are 40%, 42% and 18%. 20 g of "Mixi" sauce was stuffed in 50 g of bread dough, which was leavened at 38 °C for 40-50 minutes, then baked at an upper temperature of 190 °C and a lower temperature of 175 °C for 15-18 minutes in an oven. The results are shown in the right figure of Figure 3.

Examples 4 and 5 and Comparative Examples 4 and 5 respectively used different fat and oil compositions for bread fillings, which were leavened and baked together with bread dough, and the results are shown in Figure 2 and 3. It can be seen from Figure 2 and 3 that the breads in Example 4 and Example 5 still had glossy and continuous fillings after baking; while in Comparative Examples 4 and 5, the liquid oils in the baked bread filling had been absorbed by the bread, and fillings were dry, dull and discontinuous.

### Preparation Example 2: Preparation and performance test of oil and fat composition

Oil and fat composition a: palm olein (IV ≥ 64), palm oil fractionated stearine (IV ≥ 45) and monoglyceride were mixed at a mass ratio of 80:17:3.

After melting and mixing, the fatty acid composition, the solid fat content and the isothermal crystallization rate at 10 °C of Oil and fat composition a were measured.

Oil and fat composition b: palm olein (IV ≥ 64), palm oil fractionated stearine (IV ≥ 45) and mono- and diglyceride were mixed at a mass ratio of 85:12:3.

After melting and mixing, the fatty acid composition, the solid fat content and the isothermal crystallization rate at 10 °C of Oil and fat composition b were measured.

Oil and fat composition c: soybean oil, palm oil fractionated stearine (IV ≥ 45) and mono- and diglyceride were mixed at a mass ratio of 75:22:3.

After melting and mixing, the fatty acid composition, the solid fat content and the isothermal crystallization rate at 10 °C of Oil and fat composition c were measured.

Oil and fat composition d: palm olein (IV ≥ 64) and palm oil medium-melting-point fraction (IV = 45) were mixed at a mass ratio of 70:30.

After melting and mixing, the fatty acid composition, the solid fat content and the isothermal crystallization rate at 10 °C of Oil and fat composition d were measured.

Oil and fat composition e: palm olein (IV ≥ 64) and palm oil medium-melting-point fraction (IV = 45) were mixed at a mass ratio of 98:2.

After melting and mixing, the fatty acid composition, the solid fat content and the isothermal crystallization rate at 10 °C of Oil and fat composition e were measured.

Oil and fat composition f: palm olein (IV ≥ 64) and mono- and diglyceride were mixed at a mass ratio of 94.5:5.5.

After melting and mixing, the fatty acid composition, the solid fat content and the isothermal crystallization rate at 10 °C of Oil and fat composition f were measured.

Oil and fat composition g: palm olein (IV ≥ 64), palm oil fractionated stearine (IV ≥ 45) and monoglyceride were mixed at a mass ratio of 80:18:2.

After melting and mixing, the fatty acid composition, the solid fat content and the isothermal crystallization rate at 10 °C of Oil and fat composition g were measured.

Oil and fat composition h: palm olein (IV ≥ 64), palm oil fractionated stearine (IV ≥ 45) and mono- and diglyceride were mixed at a mass ratio of 86:13:1.

After melting and mixing, the fatty acid composition, the solid fat content and the isothermal crystallization rate at 10 °C of Oil and fat composition h were measured.

Oil and fat composition i: palm olein (IV ≥ 64), palm oil medium-melting-point fraction (IV = 45) and monoglyceride were mixed at a mass ratio of 97:2:1.

After melting and mixing, the fatty acid composition, the solid fat content and the isothermal crystallization rate at 10 °C of Oil and fat composition i were measured.

The fatty acid compositions, the solid fat contents and the isothermal crystallization rates at 10 °C of Oil and fat compositions a-i are shown in Table 4 below.

**Table 4: Fatty acid composition, solid fat content and isothermal crystallization rate at 10 °C of oil and fat compositions**

| Oil and fat composition | a | b | c | d | e | f | g | h | i |
|---|---|---|---|---|---|---|---|---|---|
| FAC, % | | | | | | | | | |
| C12:0 | 0.0 | 0.0 | 0.0 | 0.6 | 0.2 | 0.2 | 0.0 | 0.0 | 0.2 |
| C14:0 | 1.0 | 1.0 | 0.3 | 1.1 | 1.0 | 0.9 | 1.0 | 1.0 | 1.0 |
| C16:0 | 34.0 | 34.6 | 20.0 | 36.8 | 33.3 | 31.7 | 34.5 | 34.0 | 33.5 |
| C18:0 | 4.8 | 4.6 | 7.0 | 4.2 | 3.8 | 5.2 | 4.6 | 4.7 | 4.2 |
| C18:1T | 0.0 | 0.0 | 0.0 | 0.0 | 0.1 | 0.1 | 0.0 | 0.0 | 0.1 |
| C18:1C | 46.4 | 46.4 | 25.8 | 44.1 | 47.0 | 45.3 | 46.5 | 46.6 | 46.5 |
| C18:2T | 0.4 | 0.4 | 0.3 | 0.5 | 0.6 | 0.4 | 0.4 | 0.4 | 0.6 |
| C18:2C | 11.9 | 11.9 | 40.6 | 11.5 | 12.7 | 12.8 | 11.9 | 11.9 | 12.7 |
| C18:3T | 0.0 | 0.0 | 0.4 | 0.1 | 0.0 | 0.0 | 0.0 | 0.0 | 0.0 |
| C18:3C | 0.2 | 0.2 | 4.2 | 0.2 | 0.2 | 0.2 | 0.2 | 0.2 | 0.2 |
| C20:0 | 0.4 | 0.4 | 0.8 | 0.4 | 0.4 | 0.7 | 0.3 | 0.4 | 0.4 |
| C22:0 | 0.4 | 0.1 | 0.4 | 0.1 | 0.1 | 1.8 | 0.1 | 0.2 | 0.1 |
| SAFA, % | 40.7 | 40.6 | 28.5 | 43.3 | 38.8 | 40.6 | 40.5 | 40.3 | 39.4 |

| SFC, % | | | | | | | | | |
|---|---|---|---|---|---|---|---|---|---|
| 10 (°C) | 9.1 | 9.0 | 8.5 | 20.4 | 9.0 | 6.9 | 9.0 | 9.1 | 9.0 |
| 20 (°C) | 3.1 | 3.2 | 3.1 | 3.7 | 0.7 | 4.3 | 3.1 | 3.2 | 0.7 |
| 25 (°C) | 1.8 | 1.9 | 0.5 | 1.2 | 0.4 | 3.6 | 1.9 | 1.8 | 0.4 |
| 30 (°C) | 0.7 | 0.5 | 0.3 | 0.1 | 0.1 | 3.3 | 0.6 | 0.5 | 0.2 |
| 35 (°C) | 0.5 | 0.3 | 0.1 | 0.0 | 0.0 | 2.5 | 0.5 | 0.3 | 0.1 |
| 40 (°C) | 0.0 | 0.0 | 0 | 0.0 | 0.0 | 1.9 | 0.0 | 0.0 | 0.0 |

| SFC, isothermal crystallization at 10 °C, % | | | | | | | | | |
|---|---|---|---|---|---|---|---|---|---|
| 4 min | 2.9 | 2.9 | 3.0 | 2.0 | 1.0 | 4.6 | 2.8 | 2.7 | 1.2 |

### Example 6

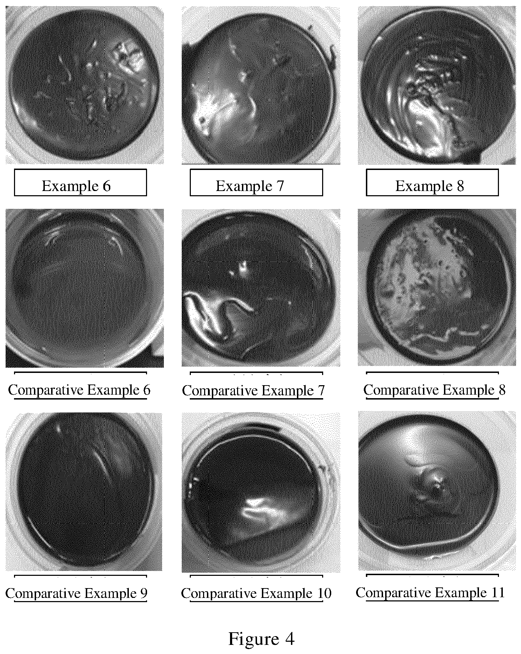

Sample preparation: A chocolate sauce was prepared by using Oil and fat compostion a, sugar, alkalized cocoa powder and skimmed milk powder at a mass percentage of 40%, 40%, 10% and 10% according to the chocolate sauce preparation method described above, and adding 0.5% of soybean lecithin before discharging. The results of 35 °C storage experiment of the chocolate sauce were determined, sensory evaluation on oil separation was conducted, and the hardness and spreadability of the chocolate sauce at 25 °C were determined. The results are shown in Table 5 below and Figure 4.

### Example 7

Sample preparation: A chocolate sauce was prepared by using Oil and fat compostion b, sugar, alkalized cocoa powder and skimmed milk powder at a mass percentage of 40%, 40%, 10% and 10% according to the chocolate sauce preparation method described above, and adding 0.5% of soybean lecithin before discharging. The results of 35 °C storage experiment of the chocolate sauce were determined, sensory evaluation on oil separation was conducted, and the hardness and spreadability of the chocolate sauce at 25 °C were determined. The results are shown in Table 5 below and Figure 4.

### Example 8

Sample preparation: A chocolate sauce was prepared by using Oil and fat compostion c, sugar, alkalized cocoa powder and skimmed milk powder at a mass percentage of 40%, 40%, 10% and 10% according to the chocolate sauce preparation method described above, and adding 0.5% of soybean lecithin before discharging. The results of 35 °C storage experiment of the chocolate sauce were determined, sensory evaluation on oil separation was conducted, and the hardness and spreadability of the chocolate sauce at 25 °C were determined. The results are shown in Table 5 below and Figure 4.

### Comparative Example 6

Sample preparation: A chocolate sauce was prepared by using Oil and fat compostion d, sugar, alkalized cocoa powder and skimmed milk powder at a mass percentage of 40%, 40%, 10% and 10% according to the chocolate sauce preparation method described above, and adding 0.5% of soybean lecithin before discharging. The results of 35 °C storage experiment of the chocolate sauce were determined, sensory evaluation on oil separation was conducted, and the hardness and spreadability of the chocolate sauce at 25 °C were determined. The results are shown in Table 5 below and Figure 4.

### Comparative Example 7

Sample preparation: A chocolate sauce was prepared by using Oil and fat compostion e, sugar, alkalized cocoa powder and skimmed milk powder at a mass percentage of 40%, 40%, 10% and 10% according to the chocolate sauce preparation method described above, and adding 0.5% of soybean lecithin before discharging. The results of 35 °C storage experiment of the chocolate sauce were determined, sensory evaluation on oil separation was conducted, and the hardness and spreadability of the chocolate sauce at 25 °C were determined. The results are shown in Table 5 below and Figure 4.

### Comparative Example 8

Sample preparation: A chocolate sauce was prepared by using Oil and fat compostion f, sugar, alkalized cocoa powder and skimmed milk powder at a mass percentage of 40%, 40%, 10% and 10% according to the chocolate sauce preparation method described above, and adding 0.5% of soybean lecithin before discharging. The results of 35 °C storage experiment of the chocolate sauce were determined, sensory evaluation on oil separation was conducted, and the hardness and spreadability of the chocolate sauce at 25 °C were determined. The results are shown in Table 5 below and Figure 4.

### Comparative Example 9

Sample preparation: A chocolate sauce was prepared by using Oil and fat compostion g, sugar, alkalized cocoa powder and skimmed milk powder at a mass percentage of 40%, 40%, 10% and 10% according to the chocolate sauce preparation method described above, and adding 0.5% of soybean lecithin before discharging. The results of 35 °C storage experiment of the chocolate sauce were determined, sensory evaluation on oil separation was conducted, and the hardness and spreadability of the chocolate sauce at 25 °C were determined. The results are shown in Table 5 below and Figure 4.

### Comparative Example 10

Sample preparation: A chocolate sauce was prepared by using Oil and fat compostion h, sugar, alkalized cocoa powder and skimmed milk powder at a mass percentage of 40%, 40%, 10% and 10% according to the chocolate sauce preparation method described above, and adding 0.5% of soybean lecithin before discharging. The results of 35 °C storage experiment of the chocolate sauce were determined, sensory evaluation on oil separation was conducted, and the hardness and spreadability of the chocolate sauce at 25 °C were determined. The results are shown in Table 5 below and Figure 4.

### Comparative Example 11

Sample preparation: A chocolate sauce was prepared by using Oil and fat compostion i, sugar, alkalized cocoa powder and skimmed milk powder at a mass percentage of 40%, 40%, 10% and 10% according to the chocolate sauce preparation method described above, and adding 0.5% of soybean lecithin before discharging. The results of 35 °C storage experiment of the chocolate sauce were determined, sensory evaluation on oil separation was conducted, and the hardness and spreadability of the chocolate sauce at 25 °C were determined. The results are shown in Table 5 below and Figure 4.

**Table 5: Hardness and spreadability of chocolate sauce placed at 25 °C for 2 weeks**

| | Hardness (g) | Spreadability (g.sec) |
|---|---|---|
| Example 6 | 214.2 | 629.5 |
| Example 7 | 223.5 | 645.1 |
| Example 8 | 245.3 | 651.4 |
| Comparative Example 6 | 13.7 | 35.6 |
| Comparative Example 7 | 7.9 | 20.3 |
| Comparative Example 8 | 178.5 | 534.1 |
| Comparative Example 9 | 201.4 | 609.4 |
| Comparative Example 10 | 232.5 | 631.7 |
| Comparative Example 11 | 9 | 30.2 |

**Table 6: Evaluation on oil separation of chocolate sauce stored at 35 °C for 1 month**

| | Evaluation on oil separation |
|---|---|
| Example 6 | 0 |
| Example 7 | 0 |
| Example 8 | 0 |
| Comparative Example 6 | 40 |
| Comparative Example 7 | 30 |
| Comparative Example 8 | 15 |
| Comparative Example 9 | 20 |
| Comparative Example 10 | 25 |
| Comparative Example 11 | 10 |

Oil and fat compositions a-i were prepared into corresponding chocolate sauces. The experimental results of the chocolate sauces stored at 35 °C for 1 month are shown in Table 6 and Figure 4. The chocolate sauces of Examples 6-8 showed no oil separation, and the surfaces were still relatively smooth and bright; the chocolate sauces of Comparative Examples 6-11 all showed different degrees of oil separation, in which Comparative Example 6 showed the most obvious oil separation, with a thick oil layer on the surface. The liquid oil content of all Oil and fat compositions a-i is > 70%. Oil and fat compositions d, g and h of Comparative Examples 6, 9 and 10 each have a solid fat content of greater than 3%, in which Oil and fat composition d does not comprise monoglyceride, and Oil and fat compositions g and h each have a mono- and diglyceride content of less than 3%, and all the corresponding chocolate sauces showed oil separation after being stored at 35 °C for 1 month. Oil and fat composition e of Comparative Example 7 has a solid fat content of less than 3%, and does not comprise mono- or diglyceride, and the corresponding chocolate sauce also showed oil separation after being stored at 35 °C for 1 month. Oil and fat composition f of Comparative Example 8 has a mono- and diglyceride content of 5.5%, which is more than 3%, and the corresponding chocolate sauce also showed oil separation after being stored at 35 °C. Oil and fat composition i of Comparative Example 11 has both of the solid fat content and the mono- and diglyceride content of < 3%, and the corresponding chocolate sauce showed oil separation after being stored at 35 °C for 1 month. Oil and fat compositions a-c of Examples 6-8 each have a liquid oil content of > 70%, a solid fat content of ≥ 3% and a mono- and diglyceride content of ≥ 3%, and the corresponding chocolate sauces were relatively stable and showed no oil separation after being stored at 35 °C for 1 month. It can be seen from Table 4 that all Oil and fat compositions a-i have a SAFA centent of < 55%, which is 20-50%. In general, the saturated acid content of fats and oils used in chocolate sauce or filling is not high.

The SFCs of oil and fat at different temperatures can directly reflect the state of the prepared chocolate sauce. The higher the SFC is, the harder the prepared sauce is and the worse the spreadability is. The crystallization rate of oil and fat will affect the speed of the coagulation of sauce. For example, when making a filling for wafer balls, the filling sauce is injected into the two wafer hemispheres, and the sauce prepared from an oil and fat that crystallizes slow is easy to leak when the two wafer hemispheres are combined, which is inconvenient to operate. Therefore, chocolate sauce not only needs suitable hardness and spreadability, but also needs a certain crystallization rate. According to Table 4, Oil and fat compositions a-c used in Examples 6-8 have an SFC (10 °C) of more than 8%, which is 8-30%; an SFC (20 °C) of more than 2%; and an SFC when isothermally crystallized at 10 °C for 4 min of more than 2%, which is 2-20%. However, as to Oil and fat compositions d-i of Comparative Examples 6-11 which showed oil separation, except for Oil and fat compositions f, g and h, the SFCs of Oil and fat compositions d, e and i when isothermally crystallized at 10 °C for 3 min are ≤ 2%, the SFC (10 °C) of Oil and fat compositiom f is < 8%, and the SFCs (20 °C) of Oil and fat compositioms e and i are < 2%.

Chocolate sauce needs to have a certain crystal skeleton to avoid oil separation, and a suitable crystal skeleton will form a certain texture and spreadability. After the oil and fat compositions are made into chocolate sauce, the chocolate sauces of Examples 6-8 were stored at 35 °C for more than 30 days without oil separation; Comparative Examples 6, 7, 10 and 11 showed oil separation in less than 7 days; Comparative Examples 8 and 9 showed oil separation in less than 1 month when stored at 35 °C. According to Table 5, Examples 6-8 that did not show oil exdation have a hardness of < 700g at 25 °C, which is 100-300g, and a spreadability of 600-1000 g.sec at 25°C. Comparative Example 6, 7 and 11 showed oil separation in less than 7 days when stored at 35 °C, and they have a hardness of 7-50g and a spreadability of 10-100 g.sec at 25 °C. When the hardness is too low and the spreadability value is too low, the sauce can not protect the crystal skeleton from destruction due to high temperature, and the liquid oil is easy to migrate and oil separation occurs.

In conclusion, the oil and fat composition of the disclosure has the characteristics of low saturated fatty acid and high temperature stability. The chocolate soft sauce made from the oil and fat composition is relatively stable, oil separation is difficult to occur under high temperature conditions such as in summer, and still has good taste, spreadability and texture, and the oil and fat composition is stable after baking and can be used for baked goods such as breads, cookies and cakes, and the filling is not easy to dry.

## Claims

1. An oil and fat composition optionally comprising 2% or more of an emulsifier based on the total weight of the oil and fat composition, and having the following characteristics:
(1) a solid fat content ≥ 8% at 10 °C;
(2) a solid fat content ≥ 2% at 20 °C; and
(3) a solid fat content ≥ 2% when isothermally crystallized at 10 °C for 4 minutes.

2. The oil and fat composition of claim 1, wherein:
the solid fat content of the oil and fat composition at 10 °C is between 8% and 50%, preferably between 8% and 30%, more preferably between 10% and 15% or between 8% and 12%;
the solid fat content of the oil and fat composition at 20 °C is between 2% and 20%, preferably between 2% and 15%, more preferably between 5% and 8% or between 2% and 5%;
the solid fat content of the oil and fat composition when isothermally crystallized at 10 °C for 4 minutes is between 2% and 20%, preferably between 2% and 15%, more preferably between 5% and 6% or between 2% and 4%.

3. The oil and fat composition of claim 1, wherein:
(A) the oil and fat composition comprises an emulsifier, and has the following characteristics:
(1) a solid fat content ≥ 8% at 10 °C, preferably between 8% and 20%, more preferably between 8% and 12%;
(2) a solid fat content ≥ 2% at 20 °C, preferably between 2% and 8%, more preferably between 2% and 5%; and
(3) a solid fat content ≥ 2% when isothermally crystallized at 10 °C for 4 minutes , preferably between 2% and 8%, more preferably between 2% and 4%; or
(B) the oil and fat composition does not comprise an emulsifier, and has the following characteristics:
(1) a solid fat content≥ 10% at 10 °C, preferably between 10% and 20%, more preferably between 10% and 15%;
(2) a solid fat content≥ 5% at 20 °C, preferably between 5% and 10%, more preferably between 5% and 8%; and
(3) a solid fat content ≥ 3% when isothermally crystallized at 10 °C for 4 minutes, preferably between 5% and 8%, more preferably between 5% and 6%.

4. The oil and fat composition of any of claims 1-3, wherein the oil and fat composition also has any one or more of the following characteristics:
(4) a liquid oil content ≥ 50%, preferably ≥ 70%;
(5) a solid fat content ≥ 3%;
(6) a content of saturated fatty acids (SAFA) ≤ 60%, preferably ≤ 55%, preferably between 20% and 50%;
(7) a solid fat content between 0.1% and 10% at 25 °C, preferably between 0.1% and 3%, between 3% and 7% or between 4% and 6%;
(8) a solid fat content between 0.1% and 8% at 30 °C, preferably between 2% and 6%, between 3% and 5%, between 0.1% and 3% or between 0.1% and 1%;
(9) a solid fat content between 0.1% and 5% at 35 °C, preferably between 0.1% and 2%, between 1% and 4%, between 2% and 3% and between 0.1% and 1%;
(10) a solid fat content between 0% and 2% at 40 °C, preferably between 0.8% and 1.5%, or 0%; and
(11) the oil and fat composition comprises 10-40% of C16:0, 20-50% of C18:1C and 10-50% of C18:2C based on the total weight of the fatty acids comprised in the composition.

5. The oil and fat composition of claim 4, wherein:
the liquid oil is an oil and fat with a melting point lower than 10 °C, and is selected from the group consisting of: natural vegetable oils and fats, such as palm oil, soybean oil, sunflower seed oil, peanut oil, rapeseed oil, cottonseed oil, corn oil, safflower seed oil, sesame oil, rice bran oil, flaxseed oil, olive oil, hazelnut oil, hickory oil, almond oil, cashew oil, macadamia oil, pistachio oil, palm kernel oil and coconut oil, and fractions or transesterified oils and fats of natural vegetable oils and fats;
the solid fat is an oil and fat that appears solid or semi-solid at room temperature, and is selected from the group consisting of: one or more of palm oil fractionated stearine, palm kernel oil fractionated stearine, cottonseed oil fractionated stearine, beef tallow fractionated stearin, lard fractionated stearine, tallowtree seed fractionated stearine, shea butter and fractionated stearine thereof, shorea butter and fractionated stearine thereof, and mango butter and fractionated stearine thereof, and each single oil or mixed oils of these oils, transesterified oils obtained by transesterification of each single oil or mixed oils of these oils, fractionated oils of each single oil or mixed oils of these oils, or fully hydrogenated fats and oils of the above liquid oils and fats;
preferably, the oil and fat composition does not comprise an emulsifier, and is a mixture of palm olein having an iodine value ≥ 50, palm oil fractionated stearine having an iodine value ≥ 35 and fully hydrogenated rapeseed oil, with their mass ratio being 20-25:1-3:1; or is a mixture of palm olein having an iodine value ≥ 50 and fully hydrogenated soybean oil, with their mass ratio being 95-99:1-5; or is a mixutre of soybean oil, palm oil fractionated stearine having an iodine value ≥ 35 and fully hydrogenated rapeseed oil, with their mass ratio being 20-25:1-3:1;
preferably, the oil and fat compostion comprises an emulsifier, and is a mixture of palm olein having an iodine value ≥ 50, palm oil fractionated stearine having an iodine value ≥ 35 and emulfisier, the mass ratio of palm olein to palm oil fractionated stearine being between 3 and 9, preferably between 4 and 8 or between 4 and 7.5; or is a mixture of soybean oil, palm oil fractionated stearine having an iodine value ≥ 30 and emulfisier, the mass ratio of soybean oil to palm oil fractionated stearine being between 1 and 5, preferably between 3 and 4; wherein the content of the emulsifier is 2-20% of the oil and fat composition.

6. A sauce comprsing the oil and fat composition of any of claims 1-5, or prepared using the oil and fat composition of any of claims 1-5 as part or all of its oil and fat;
preferably, the sauce comprises 20-50wt% of the oil and fat composition and 50-80wt% of solid matter;
preferably, the sauce is chocolate sauce or "Mixi" sauce.

7. The sauce of claim 6, wherein the solid matter comprises:
20-60% of sugar by weight of the sauce;
0-40%, such as 0-30% or 5-20%, of cocoa powder by weight of the sauce;
0-30%, such as 0-20% or 5-15%, of milk powder by weight of the sauce;
0-40%, such as 0-30% or 5-20%, of nut paste and flavor substance powder by weight of the sauce; and
0-10%, such as 0.4-5%, of emulsifying stabilizer by weight of the sauce;
preferably, the flavor substance powder is selected from one or more of the group consisting of: "Mixi" powder, peanut protein powder, soy protein powder, matcha powder, strawberry powder, coffee powder, cheese powder, sesame powder, red dates powder, red bean powder and mung bean flour;
preferably, the milk powder is selected from one or more of the group consisting of whole milk powder, skimmed milk powder and whey powder;
preferably, the emulsifying stabilizer is selected from one or more of the group consisting of soybean lecithin, polyglycerol polyricinoleate, and polyglycerol fatty acid ester.

8. The sauce of claim 6 or 7, wherein the sauce has one or more of the following characteristics:
(1) storing at 35 °C for ≥ 20 days without oil separation, such as ≥ 25 or ≥ 30 days;
(2) a hardness ≤ 1000 g at 25 °C, such as ≤ 700 g, or between 100g and 650 g; and
(3) a spreadability ≥ 100 g.sec at 25 °C, such as between 200 g.sec and 5000 g.sec or between 300 g.sec and 3000 g.sec.

9. A filling comprising the oil and fat composition of any of claims 1-5 or the sauce of any of claims 6-8.

10. A food comprising the oil and fat composition of any of claims 1-5 or the sauce of any of claims 6-8 or the filling of claim 9; preferably, the food is a chocolate product or a baked food.

11. Use of the oil and fat composition of any of claims 1-5 in the preparation of a sauce for the preparation of the filling of a chocolate product or a baked food, or in the preparation of a chocolate product or a baked food, or in improving the stablilty of a sauce or a filling after baking, especially the resistance to oil separation at high temperature.
